# EUROPÄISCHE PATENTANMELDUNG

(11) **EP 4 786 794 A2**
(43) Veröffentlichungstag der Anmeldung: **05.08.2026**
(21) Anmeldenummer: 26184639.8
(22) Anmeldetag: 11.06.2026
(51) Int. Cl.: F04D 19/04, F04D 29/058, F04D 29/64, F16C 32/04

(54) **VAKUUMPUMPE UND VERFAHREN ZUM VERSTELLEN DER AXIALEN POSITION EINES MAGNETLAGERSTATORS EINER VAKUUMPUMPE**

(71) Anmelder: Pfeiffer Vacuum Technology AG, 35614 Asslar (DE)
(72) Erfinder: EBENER, Iven Hendrik, 57290 Neunkirchen (DE); KOCH, Bernhard, 35619 Braunfels (DE); WOLFF, Nikolai, 35764 Sinn-Fleisbach (DE); SCHEPP, Timo, 35418 Buseck (DE); VOR, Maximilian, 35745 Herborn (DE); WIRTH, Niklas, 35633 Lahnau (DE); GOGOL, Torsten, 356630 Ehringshausen (DE)
(74) Vertreter: Manitz Finsterwald Patent- und Rechtsanwaltspartnerschaft mbB

(57) **Zusammenfassung**

Die Erfindung betrifft eine Vakuumpumpe, insbesondere Turbomolekularpumpe, mit
- einem axialen Einlass für ein zu pumpendes Gas,
- zumindest einer Pumpstufe, die einen Stator und einen im Betrieb relativ zum Stator um eine Drehachse rotierenden Rotor umfasst, und
- zumindest einem Magnetlager für den Rotor, insbesondere für einen einlassnahen Endbereich des Rotors, das einen Magnetlagerrotor und einen mit diesem zusammenwirkenden Magnetlagerstator umfasst, die jeweils einen Stapel aus mehreren Permanentmagnetringen aufweisen,
wobei der Magnetlagerrotor am Rotor und der Magnetlagerstator an einem Halter des Stators angeordnet ist, und wobei der Magnetlagerstator ein Stellelement umfasst, das zum Einstellen der axialen Position des Magnetlagerstators um die Drehachse verdrehbar ist, wobei das Stellelement mit einer Eingriffsstruktur, insbesondere einem Mehrkantprofil oder einer Verzahnung, versehen ist, wobei die Eingriffsstruktur sich radial nach außen verjüngende Eingriffselemente aufweist, die in radialer Richtung über die Permanentmagnetringe hinaus vorstehen. Die Erfindung betrifft außerdem zwei Verfahren zum Verstellen einer axialen Position eines Magnetlagerstators einer Vakuumpumpe.

## Beschreibung

Die Erfindung betrifft eine Vakuumpumpe, insbesondere Turbomolekularpumpe, mit einem axialen Einlass für ein zu pumpendes Gas, zumindest einer Pumpstufe, die einen Stator und einen im Betrieb relativ zum Stator um eine Drehachse rotierenden Rotor umfasst, und zumindest einem Magnetlager für den Rotor, insbesondere für einen einlassnahen Endbereich des Rotors. Das Magnetlager umfasst einen Magnetlagerrotor und einen mit diesem zusammenwirkenden Magnetlagerstator, die jeweils einen Stapel aus mehreren Permanentmagnetringen aufweisen. Der Magnetlagerrotor ist am Rotor und der Magnetlagerstator an einem Halter des Stators angeordnet. Ferner umfasst der Magnetlagerstator ein Stellelement, das zum Einstellen der axialen Position des Magnetlagerstators um die Drehachse verdrehbar ist.

Die Erfindung betrifft außerdem ein Verfahren zum Verstellen der axialen Position eines Magnetlagerstators einer Vakuumpumpe.

Bei Vakuumpumpen und insbesondere Turbomolekularpumpen handelt es sich um hinsichtlich Aufbau und Funktionsweise grundsätzlich bekannte Vorrichtungen, die vielseitig einsetzbar sind und in unterschiedlichen Anwendungen und Umgebungen in Industrie und Wissenschaft Verwendung finden. Vakuumpumpen können zur Erzeugung eines Vakuums in einer Vakuumkammer verwendet werden, wofür die Vakuumkammer an einem Einlass der Vakuumpumpe angeschlossen wird. Je nach Ausführungsform der Vakuumpumpe kann der in der Vakuumkammer erzeugte Zieldruck viele Größenordnungen unter dem herrschenden Atmosphärendruck liegen.

Die Lagerung des Rotors einer Vakuumpumpe erfolgt in der Praxis oft durch eine sogenannte Hybridlagerung. Auf der Hochvakuumseite, also einlassseitig, befindet sich das bereits erwähnte Magnetlager zwischen Rotor und Stator. Auf der Vorvakuumseite, also auf einer einlassfernen Seite, ist der Rotor mittels eines Wälzlagers, insbesondere eines Kugellagers, gelagert. Es existieren jedoch auch rein magnetgelagerte Rotoren, die sowohl an ihrem einlassseitigen Ende als auch an ihrem einlassfernen Ende jeweils durch ein Magnetlager gelagert sind.

Zwar ist die Erfindung besonders vorteilhaft für das einlassseitige Magnetlager eines Rotors einer Turbomolekularpumpe. Grundsätzlich ist die Erfindung aber für beliebige Vakuumpumpen einsetzbar, bei denen zwischen einem beliebige pumpwirksame Komponenten tragenden Rotor und einem entsprechende pumpwirksame Komponenten, die mit den rotierenden pumpwirksamen Komponenten zusammenwirken, aufweisenden Stator ein Magnetlager vorhanden ist, das sowohl statorseitig als auch rotorseitig einen Stapel aus mehreren Permanentmagnetringen aufweist.

Die Montage und das Einstellen derartiger Magnetlager stellt in der Praxis grundsätzlich eine Herausforderung dar, insbesondere was den Magnetlagerstator betrifft. Der Magnetlagerstator und der Magnetlagerrotor müssen beim Montieren der Vakuumpumpe in eine exakte - bezüglich der Drehachse - axiale Relativlage gebracht werden. Der Rotor kann aufgrund seiner Lagerung am einlassfernen Ende ein gewisses axiales Spiel besitzen, also in axialer Richtung in einem geringfügigen Maße beweglich sein. Deshalb geht man beim Einstellen des Magnetlagers, das im Rahmen der Pumpmontage erfolgt, so vor, dass die einzelnen Permanentmagnetringe zunächst an einem Bauteil des Stators vormontiert werden. Bei dem Bauteil kann es sich beispielsweise um einen in das Pumpgehäuse hinein vorstehenden Zapfen handeln, der an einer im Bereich des Pumpeinlasses angeordneten Statorkomponente ausgebildet ist. Der Zapfen für den Magnetlagerstator ist zylindrisch ausgebildet und konzentrisch zur Drehachse des Rotors angeordnet. Am freien Ende des Zapfens befindet sich ein Tellerfederpaket, wobei die Permanentmagnetringe zwischen diesem Tellerfederpaket und einem Einstellring angeordnet sind, der auf den Zapfen geschraubt ist.

Durch Verdrehen des Einstellrings können die Permanentmagnetringe gegen die Rückstellkraft des Tellerfederpakets zusammengerückt und gemeinsam zum Einstellen ihrer axialen Position relativ zum Zapfen verstellt werden, um auf diese Weise die Axialposition des Magnetlagerstators am Stator einzustellen. Die korrekte Einstellung kann anhand einer zu überwindenden Kraft beim Verdrehen des Einstellrings erkannt werden und kann bei einigen Vakuumpumpen auch daran bemerkt werden, dass der mit dem erwähnten geringen axialen Spiel behaftete Rotor aufgrund des Zusammenwirkens der Permanentmagnetringstapel von Stator und Rotor beim Einstellen relativ zueinander schlagartig einen kleinen Sprung in axialer Richtung vollführt (in diesem Fall wird die korrekte Einstellung auch als "Kippwinkel" bezeichnet).

Diese Vorgehensweise zum Einstellen des Magnetlagers einer Vakuumpumpe ist dem Fachmann grundsätzlich bekannt und ermöglicht prinzipiell eine zuverlässige und exakte axiale Positionierung des Magnetlagerstators.

Nachteilig daran ist allerdings, dass der Einstellring von der Einlassseite der Pumpe aus konstruktionsbedingt nur schlecht zugänglich ist, was im Stand der Technik zum Beispiel über kreisbogenförmige Langlöcher in der Statorkomponente gelöst wird. Zum Verdrehen der Einstellmutter werden entsprechende Pins eines Einstellwerkzeugs durch die Langlöcher hindurch in die Eingriffsöffnungen des Einstellrings eingeführt. Dieses Vorgehen hat einerseits den Nachteil, dass die erforderlichen Pins aufgrund ihrer konstruktionsbedingt erforderlichen Länge nur eine geringe Steifigkeit aufweisen, was das Einführen der Pins in die Eingriffsöffnungen erschwert und zu einem Verbiegen der Pins beim Verdrehen des Einstellrings führen kann. Andererseits muss das zum Verdrehen des Einstellrings verwendete Einstellwerkzeug mehrfach neu angesetzt werden, da die Langlöcher den Winkel begrenzen, um den das Einstellwerkzeug drehbar ist.

Aufgabe der Erfindung ist es daher, Montage und Einstellung eines Magnetlagers für den Rotor einer Vakuumpumpe zu vereinfachen.

Die Lösung dieser Aufgabe erfolgt jeweils durch die Merkmale der unabhängigen Ansprüche.

Bei der erfindungsgemäßen Vakuumpumpe ist das Stellelement mit einer Eingriffsstruktur, insbesondere einem Mehrkantprofil oder einer Verzahnung, versehen. Die Eingriffsstruktur weist sich radial nach außen verjüngende Eingriffselemente auf, die in radialer Richtung über die Permanentmagnetringe hinaus vorstehen.

Die Eingriffsstruktur ermöglicht das Verdrehen des Stellelements mittels eines Einstellwerkzeugs, das an die Eingriffselemente angesetzt wird. Die radial nach außen verjüngenden Eingriffselemente ermöglichen die Nutzung stabilerer und insbesondere um eine Drehachse rotierender Einstellwerkzeuge. Ein mehrfaches Absetzen des Einstellwerkzeugs während des Verstellens der axialen Position des Magnetlagerstators kann so vermieden werden.

Indem die Eingriffselemente in radialer Richtung über die Permanentmagnetringe hinaus vorstehen, ist es zudem möglich, das Stellelement vor einer Montage des Magnetlagerstators in der Vakuumpumpe auch von der einlassfernen axialen Richtung aus mit einem Einstellwerkzeug zu erreichen. Dies ermöglicht ein, insbesondere automatisiertes, Voreinstellen der axialen Position vor dem Einbau der Einheit aus Halter und Magnetlagerstator und/oder vor dem Einbau des Magnetlagerrotors in die Vakuumpumpe. Im Zuge des Voreinstellens kann die axiale Position bereits ungefähr auf eine finale axiale Position eingestellt werden. Dadurch ist bei dem aufwändigeren Feineinstellen bis zum Erreichen der korrekten Einstellung relativ zu dem Magnetlagerrotor, insbesondere des Kippwinkels, nur ein Verstellen der axialen Position in einem vergleichsweise geringen Umfang erforderlich.

Mit der Montage des Magnetlagerstators in der Vakuumpumpe ist in der vorliegenden Offenbarung gemeint, dass sowohl der Magnetlagerstator als auch der mit dem Magnetlagerstator zusammenwirkende Magnetlagerrotor in ein Pumpengehäuse der Vakuumpumpe eingebracht sind. Dass das Voreinstellen des Magnetlagerstators vor der Montage des Magnetlagerstators in der Vakuumpumpe erfolgt, bedeutet also, dass zumindest der Magnetlagerrotor für das Voreinstellen nicht in dem Pumpengehäuse montiert ist. Der Magnetlagerstator kann für das Voreinstellen ebenfalls außerhalb des Pumpengehäuses angeordnet sein, grundsätzlich ist aber auch ein Voreinstellen möglich und somit durch die vorliegende Offenbarung mit umfasst, bei dem der Magnetlagerstator bereits in einem - zumindest teilmontierten - Pumpengehäuse angeordnet ist.

Die Eingriffsstruktur kann von der Gesamtheit der Eingriffselemente gebildet sein. Die Eingriffselemente können in Umfangsrichtung mit gleichem Abstand zueinander an dem Stellelement angeordnet sein. Beispielsweise sind die Eingriffselemente an einer radialen Außenseite des Stellelements, insbesondere einer Mantelfläche, angeordnet und/oder an einer Stirnseite des Stellelements, insbesondere einer einlassseitigen Stirnseite des Stellelements.

Alle Eingriffselemente können gleich ausgebildet sein. Beispielsweise ist jedes Eingriffselement ein Zahn, so dass die Eingriffsstruktur in Form einer um das Stellelement umlaufenden Verzahnung vorliegt. Das Stellelement kann somit - anschaulich gesprochen - zahnradförmig ausgebildet sein und als Einstellwerkzeug kann ein Ritzel zum Einsatz kommen. Beispielsweise können benachbarte Zähne jeweils eine Eingriffseinbuchtung bilden, insbesondere mit einer gekrümmten Kontur, in die ein komplementäres Einstellwerkzeug eingreifen kann. Solche Ausführungsformen erlauben die Nutzung eines rotatorisch um eine Achse betreibbaren Einstellwerkzeugs, wodurch auf ein wiederholtes Absetzen - auch während des Feineinstellens - verzichtet werden kann. Ebenso ist es aber möglich, dass die Eingriffsstruktur als Mehrkantprofil ausgebildet ist, wobei die Eingriffselemente jeweils die von den Kanten des Mehrkantprofils gebildeten Ecken umfassen. Die Ecken können radial nach außen spitz zulaufen oder abgerundet sein. Bei einer solchen als Mehrkantprofil ausgebildeten Eingriffsstruktur kommt beispielsweise ein Einstellwerkzeug mit einem maulschlüsselartigen Eingriffselement zum Einsatz. Grundsätzlich ist es aber auch möglich, dass die Eingriffsstruktur verschiedenartige Eingriffselemente umfasst, beispielsweise Zähne und Ecken.

Dass die Eingriffselemente in radialer Richtung über die Permanentmagnete hinaus vorstehen, ist so zu verstehen, dass ein minimaler Umkreis, der das gesamte Stellelement inklusive aller Eingriffselemente einschließt, größer ist als ein minimaler Umkreis, der die Permanentmagnetringe einschließt. Die Umkreise sind insbesondere konzentrisch bezüglich der Drehachse.

Weitere Ausführungsformen finden sich in den Unteransprüchen, der Beschreibung und den beigefügten Zeichnungen.

Gemäß einer Ausführungsform ist ein Außenumfang der Eingriffsstruktur derart ausgebildet, dass er zum Verdrehen des Stellelements mit einem manuell oder automatisch handhabbaren Einstellwerkzeug in einen Formschlusseingriff bringbar ist, der durch Zuführen des Einstellwerkzeugs in axialer Richtung wahlweise vom Einlass oder von der dem Einlass abgewandten Seite herstellbar ist. Das bedeutet, dass der Formschlusseingriff ausschließlich durch das Zuführen des Einstellwerkzeugs in axialer Richtung hergestellt werden kann. Eine zusätzliche Bewegung des Einstellwerkzeugs, beispielsweise in radialer Richtung, ist für das Herstellen des Formschlusseingriffs nicht zwingend erforderlich. Das Vorstehende bezieht sich zumindest auf den isoliert betrachteten Magnetlagerstator. Der Außenumfang ist also derart ausgebildet, dass zumindest bei einem nicht in der Vakuumpumpe montierten Magnetlagerstator das Einstellwerkzeug durch Zuführen in ausschließlich axialer Richtung an den Permanentmagnetringen vorbei in Formschlusseingriff mit der Eingriffsstruktur bringbar ist. Insbesondere ist auch in einem an dem Halter des Stators montierten Zustand des Magnetlagerstators das Einstellwerkzeug aus beiden axialen Richtungen derart in den Formschlusseingriff mit der Eingriffsstruktur bringbar. Indem das Einstellwerkzeug von der dem Einlass abgewandten Seite durch Zuführen in axialer Richtung in den Formschlusseingriff mit der Eingriffsstruktur bringbar ist, wird ein Verdrehen des Stellelements mittels eines rotatorisch bezüglich einer Achse, die mit der Drehachse zusammenfällt oder parallel versetzt zu der Drehachse verläuft, betreibbaren Einstellwerkzeugs ermöglicht. So lässt sich ein besonders einfaches und schnelles Voreinstellen erreichen, insbesondere über ein automatisch handhabbares Einstellwerkzeug.

Bei einer weiteren Ausführungsform ist das Stellelement scheiben- oder hülsenförmig ausgebildet und weist eine mit der Drehachse zusammenfallende Mittelachse auf.

Bei einer weiteren Ausführungsform wirken der Halter und das Stellelement über einen Gewindetrieb zusammen. Dies ermöglicht ein besonders präzises Einstellen der axialen Position des Stellelements und somit des Magnetlagerstators. Grundsätzlich ist es aber auch möglich, dass der Magnetlagerstator ein zusätzliches Verbindungselement aufweist, das mit dem Halter über einen Gewindetrieb zusammenwirkt, wobei das Stellelement mit dem Verbindungselement derart in Wirkverbindung steht - beispielsweise mittels ineinandergreifender Stifte -, dass ein Verdrehen des Stellelements auch zu einem Verdrehen des Verbindungselements führt.

Bei einer weiteren Ausführungsform ist das Stellelement in axialer Richtung einlassseitig der Permanentmagnetringe angeordnet. Dies verringert die konstruktionsbedingt erforderliche Länge eines einlassseitig zugeführten Einstellwerkzeugs, was die Stabilität des Einstellwerkzeugs verbessern kann.

Grundsätzlich ist es aber auch möglich, das Stellelement in axialer Richtung auf einer dem Einlass abgewandten Seite der Permanentmagnetringe oder zwischen zwei Permanentmagnetringen anzuordnen. Aufgrund der in radialer Richtung über die Permanentmagnete hinaus vorstehenden Eingriffselemente ist dennoch ein Formschlusseingriff mit einem aus einlassseitiger axialer Richtung an den Permanentmagnetringen vorbeigeführten Einstellwerkzeug möglich.

Gemäß einer weiteren Ausführungsform weist der Halter einen sich parallel zur Drehachse erstreckenden Haltezapfen auf, dessen Mittelachse mit der Drehachse zusammenfällt, wobei der Magnetlagerstator an dem Haltezapfen angeordnet und relativ zu dem Haltezapfen verstellbar ist.

Der Magnetlagerstator kann einen Magnetträger umfassen, an dem die Permanentmagnetringe montiert sind. Der Haltezapfen kann in den Stapel der am Magnetträger montierten Permanentmagnetringe des Magnetlagerstators hineinragen. In einer solchen Ausführungsform kann das Stellelement über den vorstehend erwähnten Gewindetrieb mit dem Haltezapfen zusammenwirken und insbesondere relativ zu dem Magnetträger verdrehbar sein. Es ist aber auch möglich, dass das Stellelement mit dem Magnetträger verbunden ist, beispielsweise verschraubt, verschweißt oder einstückig mit diesem ausgebildet ist, wobei ein Gewindetrieb zwischen dem Haltezapfen und dem Magnetträger und/oder dem Stellelement vorgesehen sein kann.

Bei einigen Ausführungsformen umfasst der Halter einen mit einem Pumpengehäuse verbundenen, insbesondere ringförmigen, Außenabschnitt, einen den Haltezapfen aufweisenden Zentralabschnitt und zumindest einen Stegabschnitt, durch den der Zentralabschnitt mit dem Außenabschnitt verbunden ist. Insbesondere umfasst der Halter eine Mehrzahl von in Umfangsrichtung verteilt angeordneten Stegabschnitten, durch die der Zentralabschnitt mit dem Außenabschnitt verbunden ist. Beispielsweise ist der Halter sternförmig mit drei oder mehr Stegabschnitten ausgebildet. Der Halter ist insbesondere im Bereich des Pumpeneinlasses angeordnet.

Insbesondere kann der Halter ein einstückig ausgebildetes, von dem Magnetlagerstator und dem Pumpengehäuse separates Bauteil sein, das einlassseitig in das Pumpengehäuse eingesetzt und drehfest angeordnet ist.

Gemäß einer Ausführungsform fällt eine Mittelachse des Zentralabschnitts mit der Drehachse zusammen und ein Außenumfang der Eingriffsstruktur weist eine größere radiale Erstreckung auf als ein Außenumfang des Zentralabschnitts, insbesondere wobei der Zentralabschnitt flächig geschlossen ist. Flächig geschlossen bedeutet in diesem Zusammenhang, dass der Zentralabschnitt keine Durchgriffsöffnungen oder ähnliches innerhalb seines Außenumfangs aufweist. Beispielsweise ist der Zentralabschnitt scheibenförmig. Bei einer solchen Ausführungsform ist es folglich möglich, ein geeignetes Einstellwerkzeug in axialer Richtung vom Einlass an dem Außenumfang des Zentralabschnitts vorbei in Formschlusseingriff mit der Eingriffsstruktur zu bringen. Beispielsweise ist das Einstellwerkzeug zwischen den vorstehend erwähnten Stegabschnitten hindurchführbar. Eine zusätzliche Bearbeitung des Zentralabschnitts, beispielsweise das Einbringen von Durchgriffsöffnungen, entfällt, was Produktionsaufwand und Produktionskosten senkt.

Bei einigen Ausführungsformen ist in einer einlassseitigen Stirnseite des Stellelements zumindest eine axiale Eingriffsöffnung für ein Einstellwerkzeug, insbesondere ein stabförmiges Einstellwerkzeug, angeordnet. Die axiale Eingriffsöffnung ist also zusätzlich zu der beschriebenen Eingriffsstruktur vorhanden. Die Eingriffsöffnung kann sich vollständig innerhalb der Stirnseite befinden und in Umfangsrichtung geschlossen sein. Beispielsweise ist die Eingriffsöffnung als Sackloch oder als Durchgangsloch ausgebildet. Die axiale Eingriffsöffnung ermöglicht zusätzlich zu dem vorstehend beschriebenen Einstellen des Stellelements auch ein Einstellen des Stellelements z.B. mittels der eingangs erwähnten Einstellwerkzeuge mit länglichen Pins. So lassen sich durch die Eingriffsstruktur die Vorteile der vorstehend beschriebenen automatisierten Voreinstellung erzielen, ohne auf bewährte Methoden zur Feineinstellung verzichten zu müssen.

Insbesondere ist eine Mehrzahl axialer Eingriffsöffnungen vorgesehen, die in Umfangsrichtung verteilt angeordnet sind.

Die Eingriffsöffnungen können - in axialer Sicht - vollumfänglich radial außerhalb des Zentralabschnitts angeordnet sein. So kann dennoch auf Durchgriffsöffnungen innerhalb des Zentralabschnitts verzichtet werden.

Grundsätzlich ist es aber auch möglich, dass die Eingriffsöffnungen teilweise oder vollständig - in axialer Sicht - radial innerhalb des Zentralabschnitts angeordnet sind und für das Erreichen der Eingriffsöffnungen mit einem Einstellwerkzeug sind Durchgriffsöffnungen in dem Zentralabschnitt vorgesehen.

Die Permanentmagnetringe können axial zwischen dem Stellelement und einem Widerlager des Halters gegen die Rückstellkraft einer Federeinrichtung eingespannt sein. Die Federeinrichtung kann zwischen den Permanentmagnetringen einerseits und dem Stellelement und/oder dem Widerlager andererseits angeordnet sein.

Die Erfindung betrifft ferner ein Verfahren zum Verstellen der axialen Position eines Magnetlagerstators einer Vakuumpumpe, insbesondere Turbomolekularpumpe, mit einem axialen Einlass für ein zu pumpendes Gas, zumindest einer Pumpstufe, die einen Stator und einen im Betrieb relativ zum Stator um eine Drehachse rotierenden Rotor umfasst, und zumindest einem Magnetlager für den Rotor, insbesondere für einen einlassnahen Endbereich des Rotors. Das Magnetlager umfasst einen Magnetlagerrotor und den mit diesem zusammenwirkenden Magnetlagerstator, die jeweils einen Stapel aus mehreren Permanentmagnetringen aufweisen. Der Magnetlagerrotor ist am Rotor und der Magnetlagerstator an einem Halter des Stators angeordnet. Ferner umfasst der Magnetlagerstator ein um die Drehachse verdrehbares Stellelement. Bei dem Verfahren wird die axiale Position des Magnetlagerstators durch Verdrehen des Stellelements verstellt, indem ein manuell oder automatisch handhabbares Einstellwerkzeug dem Stellelement zugeführt und mit einer am Stellelement ausgebildeten Eingriffsstruktur in Formschlusseingriff gebracht wird. Das Stellelement wird mittels des Einstellwerkzeugs verdreht, indem das Einstellwerkzeug rotatorisch bezüglich einer Achse betrieben wird, die mit der Drehachse zusammenfällt oder parallel versetzt zur Drehachse verläuft.

Der Begriff "rotatorisch betreiben" bedeutet in der vorliegenden Offenbarung, dass das Einstellwerkzeug mit einem einzigen Ansetzen um einen prinzipiell beliebigen Winkelbereich verdrehbar ist, insbesondere um einen mehr als 360° betragenden Winkelbereich.

Das Verfahren zeichnet sich also dadurch aus, dass das Einstellwerkzeug nur ein einziges Mal mit der Eingriffsstruktur des Stellelements in Formschlusseingriff gebracht werden muss und das Einstellwerkzeug anschließend beliebig rotatorisch betrieben werden kann, bis die axiale Position des Magnetlagerstators auf einen gewünschten Wert eingestellt ist. Der gewünschte Wert kann beispielsweise ein vorbestimmter Wert im Rahmen einer Voreinstellung oder auch die korrekte Einstellung relativ zu dem Magnetlagerrotor bzw. der Kippwinkel sein. Da es hierbei somit nicht erforderlich ist, das Einstellwerkzeug während des Verstellvorgangs abzusetzen und anschließend in veränderter Position wieder in Formschlusseingriff mit dem Stellelement zu bringen, erlaubt ein solches Verfahren ein deutlich schnelleres und insbesondere automatisches Verstellen der axialen Position des Magnetlagerstators.

Es versteht sich, dass die axiale Position des Magnetlagerstators der vorstehend beschriebenen Vakuumpumpe mittels des beschriebenen Verfahrens verstellt werden kann.

Die Erfindung betrifft ferner ein weiteres Verfahren zum Verstellen der axialen Position eines Magnetlagerstators einer Vakuumpumpe, insbesondere Turbomolekularpumpe, mit einem axialen Einlass für ein zu pumpendes Gas, zumindest einer Pumpstufe, die einen Stator und einen im Betrieb relativ zum Stator um eine Drehachse rotierenden Rotor umfasst, und zumindest einem Magnetlager für den Rotor, insbesondere für einen einlassnahen Endbereich des Rotors. Das Magnetlager umfasst einen Magnetlagerrotor und den mit diesem zusammenwirkenden Magnetlagerstator, die jeweils einen Stapel aus mehreren Permanentmagnetringen aufweisen. Der Magnetlagerrotor ist am Rotor und der Magnetlagerstator an einem Halter des Stators angeordnet. Der Magnetlagerstator umfasst ferner ein um die Drehachse verdrehbares Stellelement. Bei dem Verfahren wird die axiale Position des Magnetlagerstators durch Verdrehen des Stellelements verstellt, indem ein manuell oder automatisch handhabbares Einstellwerkzeug dem Stellelement zugeführt und mit einer am Stellelement ausgebildeten Eingriffsstruktur in Formschlusseingriff gebracht wird. Anschließend wird das Stellelement mittels des Einstellwerkzeugs verdreht, indem das Einstellwerkzeug um eine Achse gedreht und/oder geschwenkt wird, die mit der Drehachse zusammenfällt oder parallel versetzt zur Drehachse verläuft. Insbesondere wird das Einstellwerkzeug rotatorisch bezüglich der Achse betrieben. Das Zuführen des Einstellwerkzeugs und das Herstellen des Formschlusseingriffs erfolgt hierbei aus axialer Richtung von der dem Einlass abgewandten Seite aus.

Indem das Zuführen des Einstellwerkzeugs und das Herstellen des Formschlusseingriffs aus axialer Richtung von der dem Einlass abgewandten Seite aus erfolgt, kommt dieses nicht in Konflikt mit dem Halter, wodurch das Stellelement für das Verstellen der axialen Position mittels des Einstellwerkzeugs leichter zugänglich ist. Da auf der dem Einlass abgewandten Seite üblicherweise keine Komponenten des Halters eine Bewegungsbahn, die das Einstellwerkzeug beim Drehen und/oder Schwenken um die Achse beschreibt, kreuzt, kann die axiale Position des Magnetlagerstators bei diesem Verfahren beliebig verstellt werden, ohne dass das Einstellwerkzeug zwischendurch abgesetzt werden muss.

Es versteht sich daher, dass das Einstellwerkzeug grundsätzlich rotatorisch bezüglich der Achse betrieben werden kann und somit eine Kombination beider vorstehend beschriebener Verfahren möglich ist.

Die axiale Position des Magnetlagerstators der vorstehend beschriebenen Vakuumpumpe kann mittels der beschriebenen Verfahren verstellt werden.

Die nachfolgenden Ausführungsformen sind jeweils mögliche Weiterbildungen von sowohl dem ersten als auch dem zweiten vorstehend beschriebenen Verfahren und einer Kombination beider Verfahren.

Die Eingriffsstruktur kann von auf einem Kreis um die Drehachse verteilt angeordneten Vertiefungen auf der dem Einlass abgewandten Unterseite des Stellelements gebildet sein, in welche Vorsprünge des Einstellwerkzeugs eingreifen. Die Vertiefungen sind - in axialer Sicht - radial außerhalb der Permanentmagnetringe angeordnet.

Bei einigen Ausführungsformen umfasst das Verstellen ein Voreinstellen der axialen Position des Magnetlagerstators, das vor einer Montage des Magnetlagerstators in der Vakuumpumpe erfolgt, und ein Feineinstellen der axialen Position, das nach einer Montage des Magnetlagerstators in der Vakuumpumpe erfolgt. Wie bereits vorstehend erwähnt, kann das Voreinstellen grundsätzlich auch in einem Zustand erfolgen, in dem der Magnetlagerstator innerhalb eines - zumindest teilweise montierten - Pumpengehäuses der Vakuumpumpe montiert ist, der Magnetlagerrotor aber noch nicht in dem Pumpengehäuse montiert ist. Das Voreinstellen ist also unabhängig von dem Magnetlagerrotor und verfolgt den Zweck, den Magnetlagerstator in eine ungefähre axiale Position zu bringen, sodass nur ein relativ kleiner Verstellweg bis zum Erreichen der korrekten Einstellung relativ zu dem Magnetlagerrotor bzw. des Kippwinkels erforderlich ist. So lässt sich der gesamte Einstellvorgang beschleunigen.

Bei einigen Ausführungsformen erfolgt das Voreinstellen automatisiert. Beispielsweise wird die axiale Position des Stellelements gegen die Rückstellkraft einer Federeinrichtung verstellt, bis ein vorgegebenes Drehmoment erreicht wird. Die Federeinrichtung kann insbesondere zwischen den Permanentmagnetringen einerseits und dem Stellelement und/oder einem Widerlager des Halters andererseits angeordnet sein. Alternativ oder zusätzlich zu dem Voreinstellen bis zum Erreichen eines vorgegebenen Drehmoments kann eine Überprüfung der axialen Position des Magnetlagerstators während des automatisierten Voreinstellens auch optisch und/oder kontaktbasiert erfolgen, beispielsweise mittels entsprechender Sensoren.

Ein automatisiertes Verstellen bedeutet in der vorliegenden Offenbarung zumindest, dass das Verdrehen des Stellelements mittels des Einstellwerkzeugs durch einen geeigneten Antrieb vollzogen wird, beispielsweise einen Elektromotor, insbesondere einen Servomotor. Ein manuelles Starten und/oder Stoppen und/oder Überwachen des Verdrehens des Einstellwerkzeugs kann grundsätzlich auch in einem automatisierten Verdrehen vorgesehen sein. Dies ist aber nicht zwingend der Fall.

Grundsätzlich ist auch ein automatisiertes Feineinstellen möglich, insbesondere in Verbindung mit dem vorstehend erwähnten rotatorisch um eine Achse betreibbaren Einstellwerkzeugs. Beispielsweise kann das Erreichen der korrekten Einstellung relativ zu dem Magnetlagerrotor, insbesondere des Kippwinkels, mittels geeigneter Sensorik erkannt werden.

Bei einigen Ausführungsformen erfolgt das Zuführen des Einstellwerkzeugs zum Voreinstellen einerseits und zum Feineinstellen andererseits aus entgegengesetzten axialen Richtungen des Magnetlagerstators. Insbesondere erfolgt das Voreinstellen von einer - im montierten Zustand des Magnetlagerstators - dem Einlass abgewandten Seite des Magnetlagerstators, und das Feineinstellen von einer dem Einlass zugewandten Seite. So kann das Voreinstellen, das üblicherweise eine größere Veränderung der axialen Position erfordert als das Feineinstellen, erfolgen, ohne dass der Halter die Bewegungsfreiheit des Einstellwerkzeugs begrenzt. So kann zumindest das Voreinstellen auf einfache Weise und insbesondere automatisiert erfolgen. Das potenziell kompliziertere Feineinstellen muss hingegen üblicherweise von der dem Einlass zugewandten Seite des Magnetlagerstators aus erfolgen, da hierfür auch der Magnetlagerrotor vorhanden sein muss. Das Feineinstellen kann somit händisch erfolgen, grundsätzlich ist aber - wie vorstehend erwähnt - auch ein automatisiertes Feineinstellen möglich.

Gemäß einer weiteren Ausführungsform ist die Eingriffsstruktur radial außen an dem Stellelement angeordnet und eine Stirnseite des Stellelements weist zusätzlich zumindest eine axiale Eingriffsöffnung auf. Das Feineinstellen erfolgt, indem ein Feineinstellwerkzeug in axialer Richtung in die Eingriffsöffnung eingeführt wird und das Stellelement mittels des Feineinstellwerkzeugs verdreht wird, indem das Feineinstellwerkzeug um die Drehachse geschwenkt wird. Insbesondere sind das Feineinstellwerkzeug und das Einstellwerkzeug unterschiedlich ausgebildet. Beispielsweise weist das Feineinstellwerkzeug einen oder mehrere längliche Stifte auf, die in die Eingriffsöffnung eingeführt werden.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6A: eine axiale Ansicht eines Halters mit daran angeordnetem Magnetlagerstator,
- Fig. 6B: eine radiale Ansicht des Halters und Magnetlagerstators aus der Fig. 6A,
- Fig. 7A und 7B: eine perspektivische und eine axiale Ansicht eines Stellelements,
- Fig. 8A und 8B: verschiedene perspektivische Ansichten von Einstellwerkzeugen während des Verstellens einer axialen Position eines Magnetlagerstators,
- Fig. 9: eine axiale Ansicht einer alternativen Ausführungsform eines Stellelements,
- Fig. 10A und 10B: eine axiale Ansicht und eine perspektivische Ansicht eines alternativen Einstellwerkzeugs beim Verstellen der axialen Position eines Magnetlagerstators mittels des Stellelements aus der Fig. 9.
- Fig. 11: eine weitere Ausführungsform eines Stellelements.

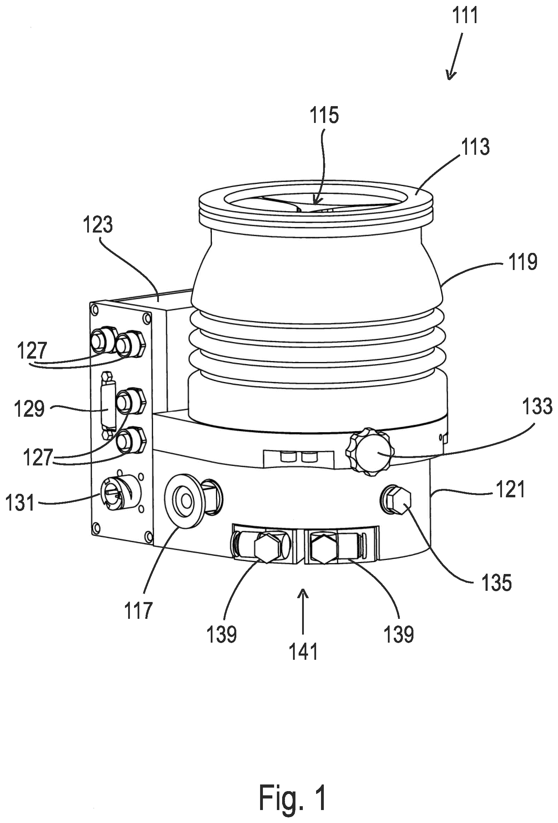

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

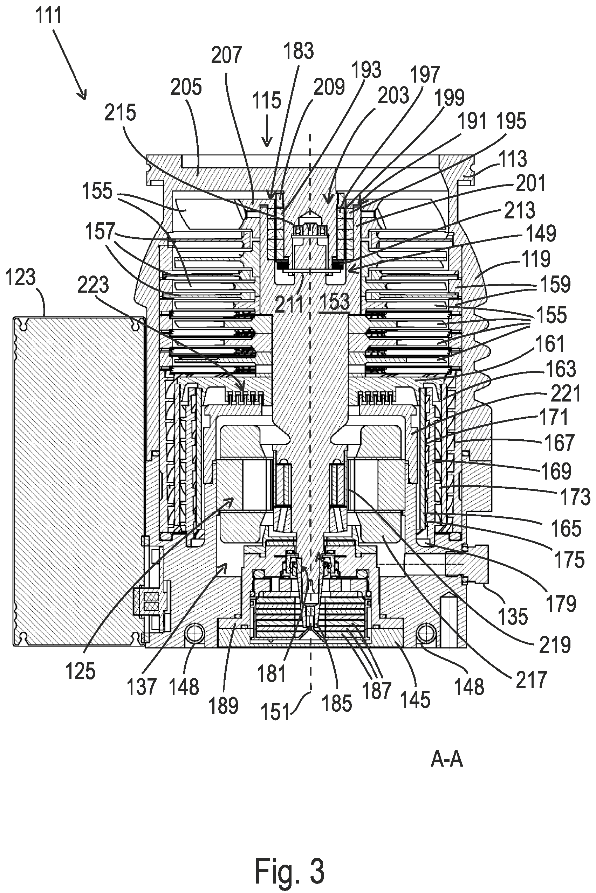

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125 (vgl. auch Fig. 3). Am Elektronikgehäuse 123 sind mehrere Anschlüsse 127 für Zubehör vorgesehen.

Außerdem sind eine Datenschnittstelle 129, z.B. gemäß dem RS485-Standard, und ein Stromversorgungsanschluss 131 am Elektronikgehäuse 123 angeordnet.

Es existieren auch Turbomolekularpumpen, die kein derartiges angebrachtes Elektronikgehäuse aufweisen, sondern an eine externe Antriebselektronik angeschlossen werden.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, eingelassen werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann. Andere existierende Turbomolekularvakuumpumpen (nicht dargestellt) werden ausschließlich mit Luftkühlung betrieben.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann. Grundsätzlich sind dabei beliebige Winkel möglich.

Andere existierende Turbomolekularvakuumpumpen (nicht dargestellt), die insbesondere größer sind als die hier dargestellte Pumpe, können nicht stehend betrieben werden.

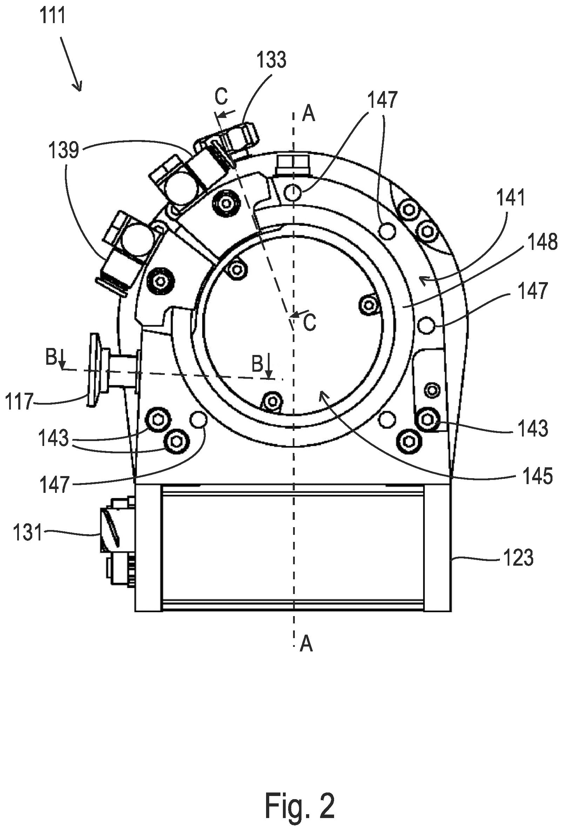

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann. Dies ist bei anderen existierenden Turbomolekularvakuumpumpen (nicht dargestellt), die insbesondere größer sind als die hier dargestellte Pumpe, nicht möglich.

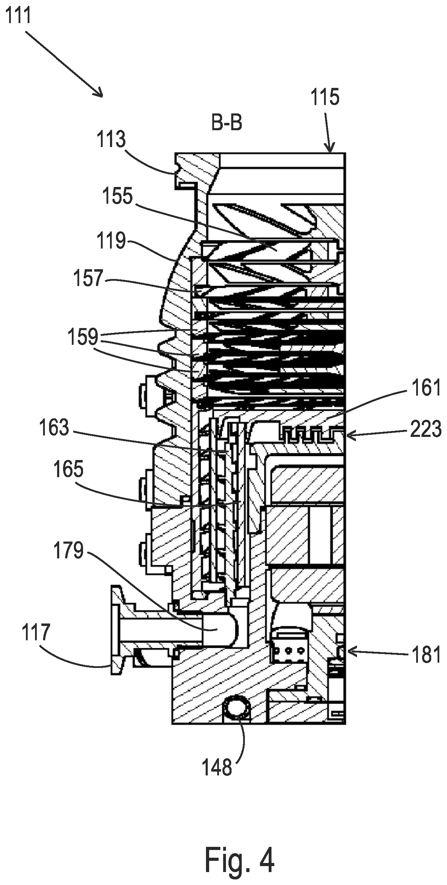

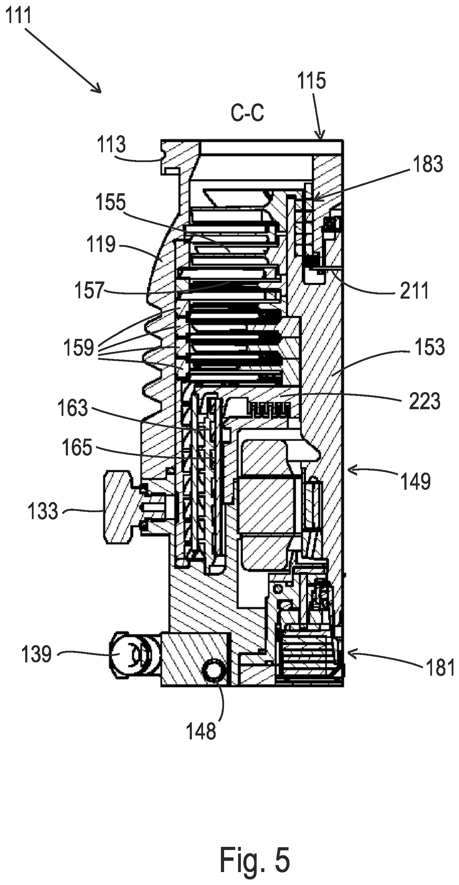

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Es existieren andere Turbomolekularvakuumpumpen (nicht dargestellt), die keine Holweck-Pumpstufen aufweisen.

Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 167, 169 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Bei anderen existierenden Turbomolekularvakuumpumpen (nicht dargestellt) kann anstelle einer Spritzmutter eine Spritzschraube vorgesehen sein. Da somit unterschiedliche Ausführungen möglich sind, wird in diesem Zusammenhang auch der Begriff "Spritzspitze" verwendet.

Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 201 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, damit eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

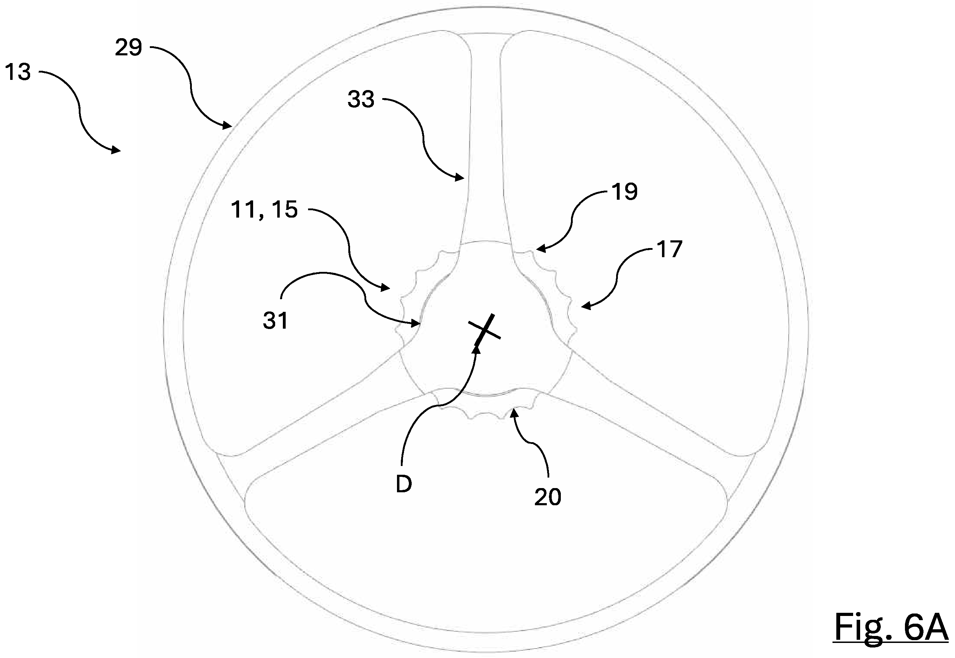

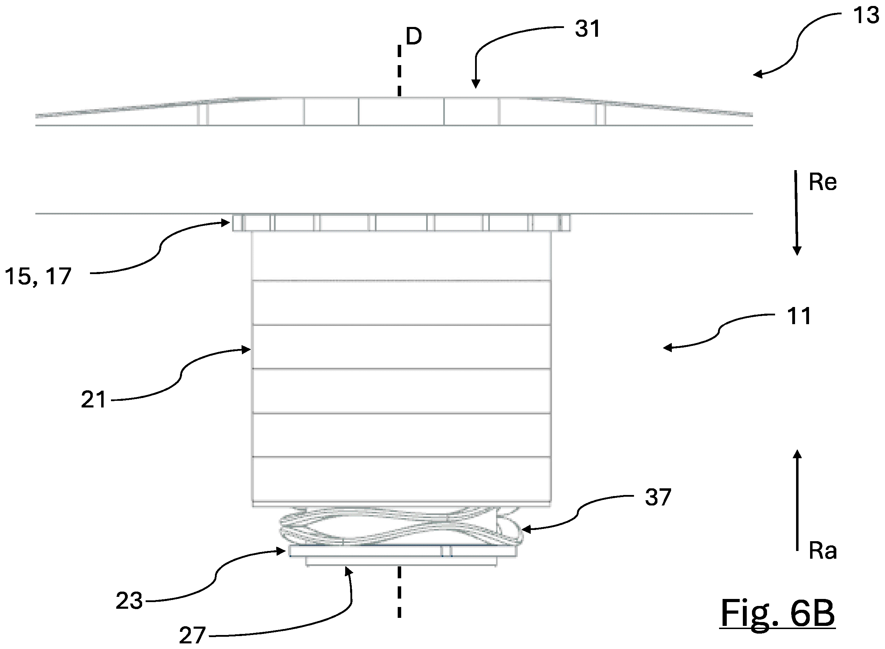

In den Fig. 6A und 6B ist ein Halter 13 mit daran angeordnetem Magnetlagerstator 11 dargestellt, wie er einlassseitig einer Turbomolekularpumpe 111 gemäß den Fig. 1 bis 5 montiert sein kann.

Der Halter 13 umfasst einen ringförmigen Außenabschnitt 29 zur Montage an einem Pumpengehäuse einer Turbomolekularpumpe. Von dem Außenabschnitt 29 erstrecken sich drei Stegabschnitte 33 radial nach innen, wo sie einen - in axialer Sicht (vgl. Fig. 6A) - kreisförmigen Zentralabschnitt 31 halten.

Wie in der Fig. 6B zu sehen ist, ist an dem Zentralabschnitt 31 ein Haltezapfen 27 angeordnet. Dieser erstreckt sich im montierten Zustand koaxial zu einer Drehachse D der Vakuumpumpe.

An dem Haltezapfen 27 angeordnet ist ein Magnetlagerstator 11, der sich aus mehreren koaxial aufeinander gestapelten Permanentmagnetringen 21 und einem

Stellelement 15 zusammensetzt. Das Stellelement 15 ist koaxial zu der Drehachse D und einlassseitig der Permanentmagnetringe 21 angeordnet. Der Haltezapfen 27 erstreckt sich also durch den Stapel aus Permanentmagnetringen 21 und durch das Stellelement 15 hindurch.

Auslassseitig des Magnetlagerstators 11 ist eine Federeinrichtung 37 an dem Haltezapfen 27 angeordnet, die an einem Widerlager 23 abgestützt ist. Das Widerlager 23 befindet sich an dem dem Zentralabschnitt 31 abgewandten Ende des Haltezapfens 27.

Der Magnetlagerstator 11 ist über einen Gewindetrieb (nicht dargestellt) mit dem Haltezapfen 27 verbunden. Der Gewindetrieb kann beispielsweise an dem Stellelement 15 und/oder an einem Magnetträger, auf dem die Permanentmagnetringe 21 aufgereiht sind, angeordnet sein. Durch den Gewindetrieb ist eine axiale Position des Magnetlagerstators 11 entlang des Haltezapfens 27 gegen die Rückstellkraft der Federeinrichtung 37 verstellbar. Dies ermöglicht das Einstellen der axialen Position des Magnetlagerstators 11 relativ zu einem Magnetlagerrotor der Vakuumpumpe (nicht dargestellt).

Das Verstellen der axialen Position des Magnetlagerstators 11 erfolgt mittels Verdrehens des Stellelements 15. Wie in der Fig. 6A ersichtlich ist, verfügt das Stellelement 15 zu diesem Zweck über eine Eingriffsstruktur 17, die von mehreren sich radial nach außen verjüngenden Eingriffselementen 19 gebildet wird. In dem gezeigten Ausführungsbeispiel sind die Eingriffselemente 19 als spitz zulaufende Zähne ausgebildet, so dass die Eingriffsstruktur 17 als Verzahnung ausgebildet ist. In dem gezeigten Ausführungsbeispiel wird eine Außenkontur der Eingriffsstruktur 17 von gekrümmten Flächen gebildet, so dass zwischen zwei Eingriffselementen 19 jeweils eine Eingriffseinbuchtung 20 angeordnet ist.

Wie in den Fig. 6A und 6B ersichtlich ist, stehen die Eingriffselemente 19 und die Eingriffseinbuchtungen 20 in radialer Richtung über die Permanentmagnetringe 21 (vgl. Fig. 6B) und den Zentralabschnitt 31 (vgl. Fig. 6A) hinaus vor. Dies ermöglicht es, dass die Eingriffsstruktur 17 für ein geeignetes Einstellwerkzeug sowohl aus einer einlassseitigen axialen Richtung Re, als auch aus einer auslassseitigen axialen Richtung Ra aus zugänglich ist. Daraus ergeben sich relevante Vorteile sowohl für ein Voreinstellen als auch für ein Feineinstellen der axialen Position des Magnetlagerstators 11, was nachfolgend näher erläutert wird.

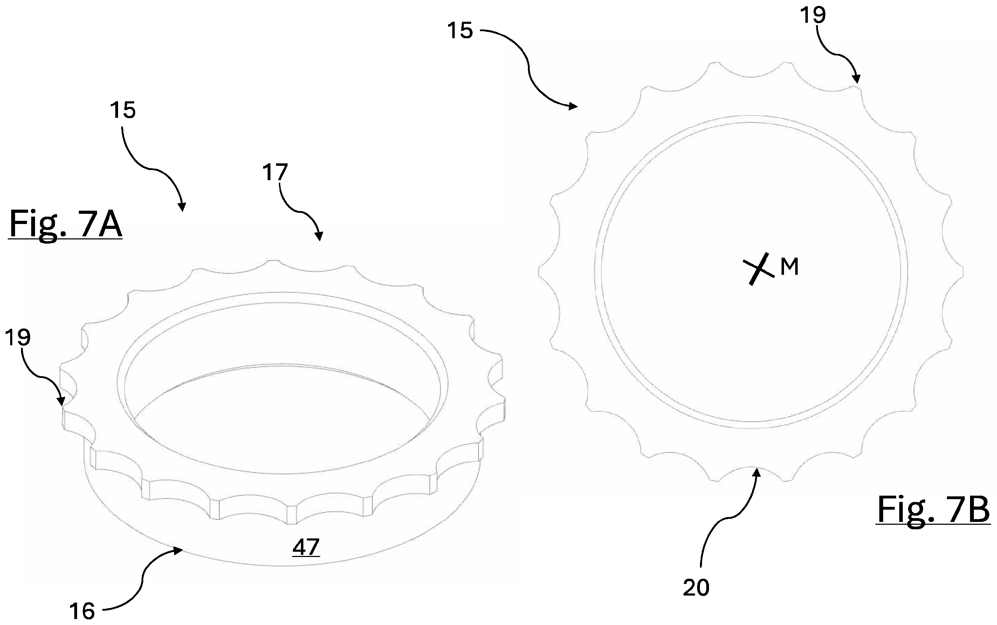

Das Stellelement 15 aus den Fig. 6A und 6B ist in den Fig. 7A und 7B vergrößert dargestellt und besteht im Wesentlichen aus einer vergleichsweise kurzen Hülse 16, die drehsymmetrisch bezüglich einer Mittelachse M ist, wobei die Mittelachse M im montierten Zustand des Stellelements 15 mit der Drehachse D (vgl. Fig. 6A und 6B) zusammenfällt.

Die Eingriffsstruktur 17 ist in diesem Ausführungsbeispiel kragenförmig an einem ersten Ende des Stellelements 15 angeordnet und erstreckt sich in axialer Richtung abschnittsweise über eine Mantelfläche 47 der Hülse 16. Es sind jedoch auch Ausführungsformen möglich, bei denen die gesamte axiale Erstreckung der Mantelfläche 47 mit der Eingriffsstruktur 17 versehen ist.

Wie vorstehend bereits erläutert wurde, wird die Eingriffsstruktur 17 von mehreren zahnförmigen Eingriffselementen 19 sowie dazwischen angeordneten Eingriffseinbuchtungen 20 gebildet. In diesem Ausführungsbeispiel sind alle Eingriffselemente 19 gleich ausgebildet und in Umfangsrichtung gleich zueinander beabstandet, wodurch auch alle Eingriffseinbuchtungen 20 gleich ausgebildet sind. Grundsätzlich ist es aber auch möglich, dass die Eingriffsstruktur 17 verschieden ausgebildete Eingriffselemente 19 umfasst.

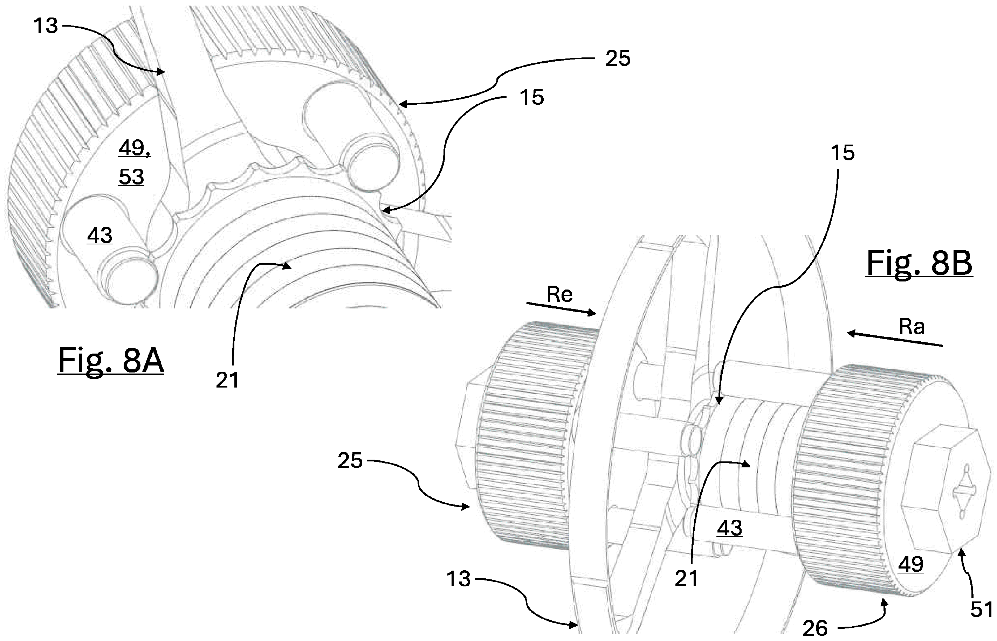

Ein Verfahren zum Einstellen der axialen Position des Magnetlagerstators 11 mittels des Stellelements 15 ist in den Fig. 8A und 8B dargestellt.

Für das Einstellen kommt ein Einstellwerkzeug 25, 26 zum Einsatz, das in dem gezeigten Ausführungsbeispiel einen zylinderförmigen Kopfabschnitt 49 aufweist, von dessen erster Stirnseite 53 aus sich drei parallele Einstellbolzen 43 in axialer Richtung erstrecken und auf dessen von der Stirnseite 53 abgewandten Seite eine in Form eines Sechskants ausgebildete Verstellhilfe 51 ausgebildet ist. Es versteht sich aber, dass grundsätzlich auch anders ausgebildete Einstellwerkzeuge zum Einsatz kommen können.

Wie in den Fig. 8A und 8B ersichtlich ist, sind die Einstellbolzen 43 komplementär zu den Eingriffseinbuchtungen 20 ausgebildet und können somit mit der Eingriffsstruktur 17 in einen Formschlusseingriff gebracht werden. Der Formschluss ist zumindest in Drehrichtung um die Drehachse D wirksam, so dass durch Verdrehen des Einstellwerkzeugs 25, 26 das Stellelements 15 verdreht und dadurch die axiale Position des Magnetlagerstators 11 an dem Halter 13 verstellt wird.

Wie insbesondere in der Fig. 8B zu sehen ist, ermöglicht die vorstehend beschriebene Ausbildung des Stellelements 15, dass das Einstellwerkzeug 25, 26 dem Stellelement 15 aus axialer Richtung zugeführt wird.

Die radial über die Permanentmagnetringe 21 vorstehende Eingriffsstruktur 17 ermöglicht einerseits ein Zuführen des Einstellwerkzeugs 25 aus einlassseitiger axialer Richtung Re, wobei die Einstellbolzen 43 zwischen den Stegabschnitten 33 an dem Zentralabschnitt 31 vorbeigeführt werden, um in Formschlusseingriff mit der Eingriffsstruktur 17 gebracht zu werden.

Andererseits ist es auch möglich, das Einstellwerkzeug 26 aus der auslassseitigen axialen Richtung Ra in Formschlusseingriff mit der Eingriffsstruktur 17 des Stellelements 15 zu bringen, wobei die Einstellbolzen 43 radial außen an den Permanentmagnetringen 21 vorbeigeführt werden. Dies hat den Vorteil, dass ein Verdrehen des in Formschlusseingriff mit der Eingriffsstruktur 17 befindlichen Einstellwerkzeugs 26 um die Drehachse D um einen prinzipiell beliebigen, auch ein Mehrfaches von 360° umfassenden Winkelbereich möglich ist, da die Drehbewegung des Einstellwerkzeugs 26 nicht von Komponenten des Halters 13, wie beispielsweise den Stegabschnitten 33, begrenzt wird. Somit ist insbesondere ein rotatorisches Betreiben des Einstellwerkzeugs 26 möglich, was auch automatisiert erfolgen kann.

Ein Verfahren zum Einstellen der axialen Position des Magnetlagerstators 11 kann daher wie folgt ablaufen:
Grundsätzlich kann das Einstellen der axialen Position ein Voreinstellen und ein Feineinstellen umfassen. Das Voreinstellen erfolgt in einem noch nicht in der Vakuumpumpe montierten Zustand des Magnetlagerstators 11. So kann der Magnetlagerstator 11 beispielsweise, wie in den Fig. 8A und 8B dargestellt ist, an dem Halter 13 montiert sein, der Halter 13 befindet sich aber noch außerhalb der Vakuumpumpe und der Magnetlagerstator 11 ist daher noch nicht von dem Magnetlagerrotor umgeben. Dies ermöglicht es, das Voreinstellen aus der auslassseitigen axialen Richtung Ra mittels des Einstellwerkzeugs 26 durchzuführen.

Das Einstellwerkzeug 26 wird also aus der auslassseitigen axialen Richtung Ra dem Stellelement 15 zugeführt und die Einstellbolzen 43 werden in einen Formschlusseingriff mit der Eingriffsstruktur 17 gebracht. Anschließend wird das Stellelement 15 mittels des Einstellwerkzeugs 26 verdreht, wobei das Einstellwerkzeug 26 um die Drehachse D gedreht wird. Da das Verdrehen des Einstellwerkzeugs 26 nicht von Strukturen des Halters 13 behindert wird, kann das gesamte Voreinstellen ohne Absetzen des Einstellwerkzeugs 26 von dem Stellelement 15 erfolgen, weshalb das Einstellwerkzeug 26 auch rotatorisch bezüglich der Drehachse D betrieben werden kann. Somit ist ein automatisiertes Voreinstellen möglich, beispielsweise indem ein geeigneter Antriebsmotor an die Verstellhilfe 51 gekoppelt wird und das Einstellwerkzeug 26 rotatorisch betrieben wird, bis zum Überwinden der Rückstellkraft der Federeinrichtung 37 ein bestimmtes Drehmoment aufgebracht werden muss. Nach dem Voreinstellen befindet sich das Stellelement 15 also in einer axialen Position, die ungefähr der finalen Position entspricht, so dass während des anschließenden Feineinstellens das Stellelement 15 um einen deutlich kleineren Winkelbereich verdreht werden muss als während des Voreinstellens.

Das Feineinstellen verfolgt den Zweck, den Magnetlagerstator 11 optimal in Bezug auf den Magnetlagerrotor auszurichten. Folglich erfordert das Feineinstellen das Vorhandensein des Magnetlagerrotors und kann daher nicht von der auslassseitigen axialen Richtung Ra aus erfolgen. Für das Feineinstellen wird stattdessen aus einlassseitiger axialer Richtung Re das Einstellwerkzeugs 25 eingeführt, wie insbesondere in der Fig. 8A dargestellt ist.

In dem gezeigten Ausführungsbeispiel ist das Einstellwerkzeug 25 gleich ausgebildet wie das Einstellwerkzeug 26. Also erfolgt der Formschlusseingriff des Einstellwerkzeugs 25 mit dem Stellelement 15 wie vorstehend beschrieben, wobei der Winkelbereich, um den das Stellelement 15 ohne Absetzen des Einstellwerkzeugs 25 verdrehbar ist, durch die Stegabschnitte 33 begrenzt ist und ein rotatorisches Betreiben des Einstellwerkzeugs 25, das aus einlassseitiger axialer Richtung Re in Formschlusseingriff mit der Eingriffsstruktur 17 gebracht werden müsste, folglich nicht möglich wäre. Dies ist jedoch insofern unproblematisch, als - wie vorstehen erwähnt - für das Feineinstellen das Stellelement 15 nur um einen vergleichsweise kleinen Winkelbereich verdreht und da Einstellwerkzeug 25 daher ohnehin nicht mehrfach angesetzt zu werden braucht.

Alternativ ist es auch möglich, dass das Stellelement 15 zusätzlich zu der Eingriffsstruktur 17 eine weitere Eingriffsstruktur für das Feineinstellen aufweist, beispielsweise einlassseitige axiale Eingriffsöffnungen (nicht gezeigt), in die dann ein von dem Einstellwerkzeug 25 verschiedenes Einstellwerkzeug eingebracht werden kann.

Die vorstehend beschriebene Ausgestaltung des Stellelements 15 erlaubt somit, das Einstellen der axialen Position des Magnetlagerstators 11 zu vereinfachen und zu beschleunigen, indem zumindest das Voreinstellen automatisiert erfolgen kann. Auch das Feineinstellen wird durch die beschriebene Eingriffsstruktur 17 begünstigt, da ein Formschluss auch aus der einlassseitigen axialen Richtung Re einfacher und stabiler herstellbar ist als mit im Stand der Technik bekannten Möglichkeiten.

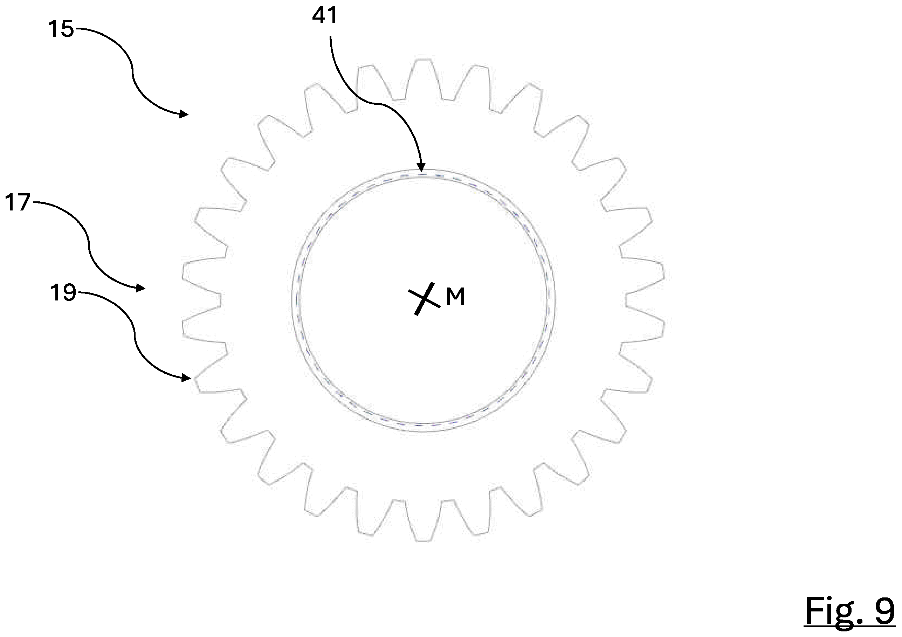

In der Fig. 9 ist eine weitere Ausführungsform des Stellelements 15 dargestellt, welches drehsymmetrisch bezüglich einer Mittelachse M ist und als Eingriffsstruktur 17 eine Verzahnung aufweist, die von mehreren Eingriffselementen 19 in Form von Zähnen gebildet wird. Anders als das vorstehend erläuterte Stellelement 15 aus den Fig. 6 bis 8, verfügt dieses Stellelement 15 aber nicht über vergleichsweise große Eingriffseinbuchtungen 20, die zwischen den Eingriffselementen 19 angeordnet sind, sondern ist stattdessen zahnradförmig ausgebildet.

Wie auch das vorstehend beschriebene Stellelement 15, kann auch das Stellelement 15 der Fig. 9 scheiben- oder hülsenförmig ausgebildet sein und weist an seiner der Mittelachse M zugewandten Innenseite ein Gewinde 41 auf, das mit einem Außengewinde des Haltezapfens 27 einen Gewindetrieb bilden kann.

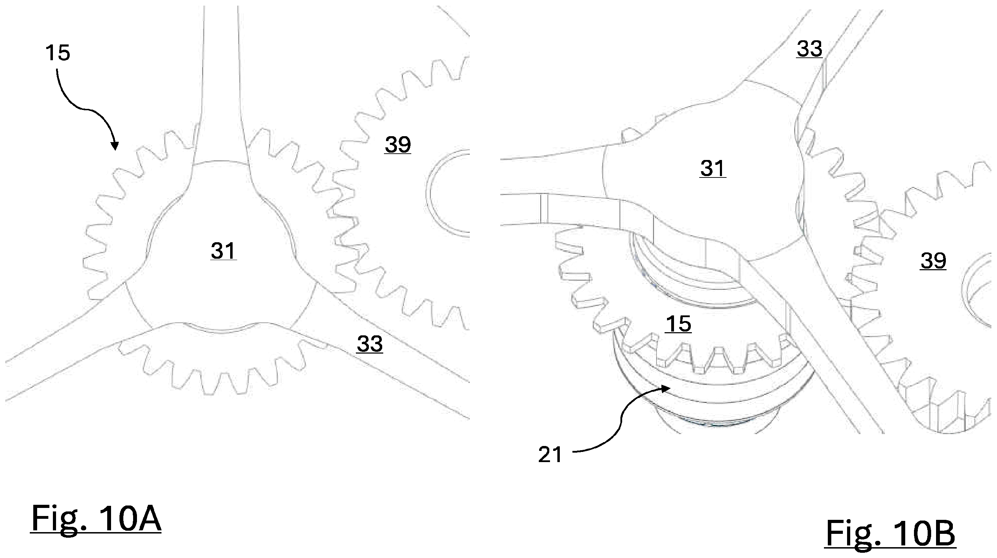

Wie in den Fig. 10A und 10B gezeigt ist, ist dieses Stellelement 15 dazu ausgebildet, in Formschlusseingriff mit einem ritzelförmigen Einstellwerkzeug 39 zu kommen und somit nach Art eines Zahnradantriebs verdreht zu werden. Das Verdrehen des Stellelements 15 erfolgt also durch rotatorisches Antreiben des Einstellwerkzeugs 39 um eine Achse, die parallel zu der Drehachse D verläuft. Diese Ausführungsform bietet den Vorteil, dass auch - ein Einstellwerkzeug 39 mit ausreichend kleinem Durchmesser vorausgesetzt - ein Zuführen des Einstellwerkzeugs 39 aus der einlassseitigen axialen Richtung Re in Kombination mit einem rotatorischen Betreiben des Einstellwerkzeugs 39 möglich ist. Somit lässt sich mit dieser Ausführungsform des Stellelements 15 auch ein Feineinstellen der axialen Position des Magnetlagerstators 11 vornehmen, ohne dass das Einstellwerkzeug 39 von der Eingriffsstruktur 17 abgesetzt werden muss. Ansonsten gelten die vorstehenden Ausführungen aus den Fig. 6 bis 8 analog.

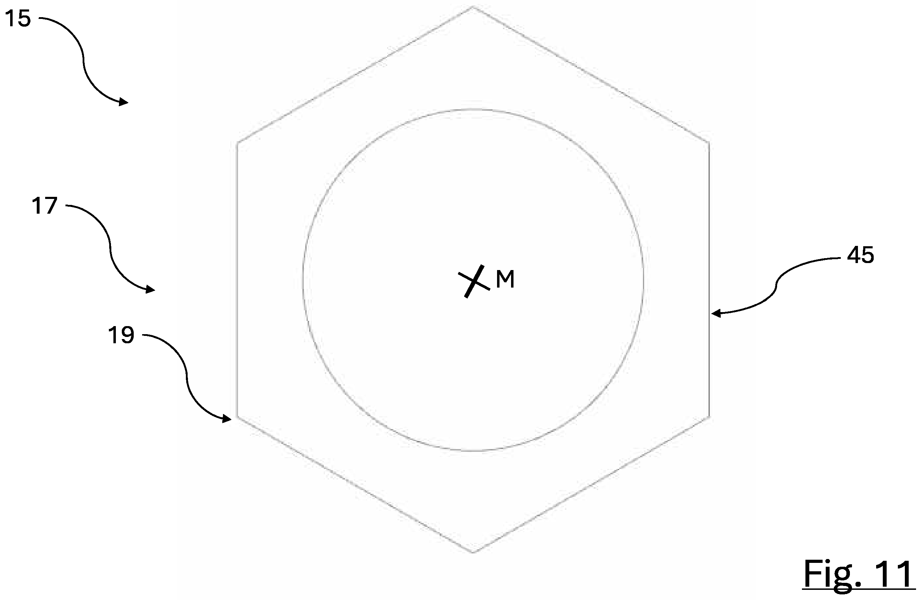

Die Fig. 11 zeigt eine weitere Ausführungsform des Stellelements 15, bei der die Eingriffsstruktur 17 in Form eines Sechskants ausgebildet ist. Selbstverständlich sind auch andere Formen eines Mehrkants möglich, beispielsweise ein Vierkant, ein Fünfkant oder ein Zwölfkant.

Die Kanten 45 eines solchen Mehrkants laufen in axialer Sicht radial nach außen zu Ecken zusammen, welche in derartigen Ausführungsformen die Eingriffselemente 19 bilden. In der dargestellten Ausführungsform laufen die Kanten 45 jeweils zu spitzen Eingriffselementen 19 zusammen. Es ist aber auch möglich, dass die Eingriffselemente 19 abgerundet sind. Es versteht sich, dass auch mit dieser Ausführungsform des Stellelements 15 ein Einstellen der axialen Position des Magnetlagerstators 11 mittels eines geeigneten Einstellwerkzeugs in analoger Weise möglich ist, wie bereits zu den Fig. 6 bis 8 beschrieben wurde.

### Bezugszeichenliste

- 11: Magnetlagerstator
- 13: Halter
- 15: Stellelement
- 16: Hülse
- 17: Eingriffsstruktur
- 19: Eingriffselement
- 20: Eingriffseinbuchtung
- 21: Permanentmagnetring
- 23: Widerlager
- 25: Einstellwerkzeug (einlasseitig)
- 26: Einstellwerkzeug (auslassseitig)
- 27: Haltezapfen
- 29: Außenabschnitt
- 31: Zentralabschnitt
- 33: Stegabschnitt
- 35: Stirnseite
- 37: Federeinrichtung
- 39: Einstellwerkzeug (Ritzel)
- 41: Gewinde
- 43: Einstellbolzen
- 45: Kante
- 47: Mantelfläche
- 49: Kopfabschnitt
- 51: Verstellhilfe
- 53: Stirnseite

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung

- D: Drehachse
- M: Mittelachse
- Re: einlassseitige axiale Richtung
- Ra: auslassseitige axiale Richtung

## Patentansprüche

1. Vakuumpumpe, insbesondere Turbomolekularpumpe (111), mit
- einem axialen Einlass (115) für ein zu pumpendes Gas,
- zumindest einer Pumpstufe, die einen Stator und einen im Betrieb relativ zum Stator um eine Drehachse (D) rotierenden Rotor (149) umfasst, und
- zumindest einem Magnetlager (183) für den Rotor (149), insbesondere für einen einlassnahen Endbereich des Rotors (149), das einen Magnetlagerrotor (191) und einen mit diesem zusammenwirkenden Magnetlagerstator (11, 193) umfasst, die jeweils einen Stapel aus mehreren Permanentmagnetringen (21) aufweisen,
wobei der Magnetlagerrotor (191) am Rotor (149) und der Magnetlagerstator (11, 193) an einem Halter (13, 203) des Stators angeordnet ist, und wobei der Magnetlagerstator (11, 193) ein Stellelement (15) umfasst, das zum Einstellen der axialen Position des Magnetlagerstators (11, 193) um die Drehachse (D) verdrehbar ist,
wobei das Stellelement (15) mit einer Eingriffsstruktur (17), insbesondere einem Mehrkantprofil oder einer Verzahnung, versehen ist,
wobei die Eingriffsstruktur (17) sich radial nach außen verjüngende Eingriffselemente (19) aufweist, die in radialer Richtung über die Permanentmagnetringe (21) hinaus vorstehen.

2. Vakuumpumpe nach Anspruch 1,
wobei ein Außenumfang der Eingriffsstruktur (17) derart ausgebildet ist, dass sie zum Verdrehen des Stellelements (15) mit einem manuell oder automatisch handhabbaren Einstellwerkzeug (25, 26, 39) in einen Formschlusseingriff bringbar ist, der durch Zuführen des Einstellwerkzeugs (25, 26, 39) in axialer Richtung (Re, Ra) wahlweise vom Einlass (113) oder von der dem Einlass (113) abgewandten Seite herstellbar ist.

3. Vakuumpumpe nach Anspruch 1 oder 2,
wobei das Stellelement (15) scheiben- oder hülsenförmig ausgebildet ist und eine mit der Drehachse (D) zusammenfallende Mittelachse (M) aufweist.

4. Vakuumpumpe nach einem der Ansprüche 1 bis 3,
wobei das Stellelement (15) und der Halter (13) über einen Gewindetrieb zusammenwirken.

5. Vakuumpumpe nach einem der Ansprüche 1 bis 4,
wobei das Stellelement (15) in axialer Richtung einlassseitig der Permanentmagnetringe (21) angeordnet ist.

6. Vakuumpumpe nach einem der Ansprüche 1 bis 5,
wobei der Halter (13) einen sich parallel zur Drehachse (D) erstreckenden Haltezapfen (27) aufweist, dessen Mittelachse mit der Drehachse (D) zusammenfällt, wobei der Magnetlagerstator (11) an dem Haltezapfen (27) angeordnet und axial relativ zu dem Haltezapfen (27) verstellbar ist.

7. Vakuumpumpe nach Anspruch 6,
wobei der Halter (13) einen mit einem Pumpengehäuse (119) verbundenen, insbesondere ringförmigen, Außenabschnitt (29), einen den Haltezapfen (27) aufweisenden Zentralabschnitt (31) und zumindest einen Stegabschnitt (33) umfasst, durch den der Zentralabschnitt (31) mit dem Außenabschnitt (29) verbunden ist.

8. Vakuumpumpe nach Anspruch 7,
wobei eine Mittelachse des Zentralabschnitts (31) mit der Drehachse (D) zusammenfällt und wobei ein Außenumfang der Eingriffsstruktur (17) eine größere radiale Erstreckung aufweist als ein Außenumfang des Zentralabschnitts (31), insbesondere wobei der Zentralabschnitt (31) flächig geschlossen ist.

9. Vakuumpumpe nach einem der Ansprüche 1 bis 8,
wobei in einer einlassseitigen Stirnseite des Stellelements (15) zumindest eine axiale Eingriffsöffnung für ein Einstellwerkzeug, insbesondere ein stabförmiges Einstellwerkzeug, angeordnet ist.

10. Verfahren zum Verstellen der axialen Position eines Magnetlagerstators (11) einer Vakuumpumpe, insbesondere Turbomolekularpumpe (111), insbesondere nach einem der vorhergehenden Ansprüche, mit
- einem axialen Einlass (115) für ein zu pumpendes Gas,
- zumindest einer Pumpstufe, die einen Stator und einen im Betrieb relativ zum Stator um eine Drehachse (D) rotierenden Rotor (149) umfasst, und
- zumindest einem Magnetlager (183) für den Rotor (149), insbesondere für einen einlassnahen Endbereich des Rotors (149), das einen Magnetlagerrotor (191) und den mit diesem zusammenwirkenden Magnetlagerstator (11, 193) umfasst, die jeweils einen Stapel aus mehreren Permanentmagnetringen (21) aufweisen,
wobei der Magnetlagerrotor (191) am Rotor (149) und der Magnetlagerstator (11, 193) an einem Halter (13, 203) des Stators angeordnet ist und der Magnetlagerstator (11, 193) ein um die Drehachse (D) verdrehbares Stellelement (15) umfasst,
wobei bei dem Verfahren die axiale Position des Magnetlagerstators (11, 193) durch Verdrehen des Stellelements (15) verstellt wird, indem
- ein manuell oder automatisch handhabbares Einstellwerkzeug (25, 26, 39) dem Stellelement (15) zugeführt und mit einer am Stellelement (15) ausgebildeten Eingriffsstruktur (17) in Formschlusseingriff gebracht wird, und
- das Stellelement (15) mittels des Einstellwerkzeugs (25, 26, 39) verdreht wird, indem das Einstellwerkzeug (25, 26, 39) rotatorisch bezüglich einer Achse betrieben wird, die mit der Drehachse (D) zusammenfällt oder parallel versetzt zur Drehachse (D) verläuft.

11. Verfahren zum Verstellen der axialen Position eines Magnetlagerstators (11, 193) einer Vakuumpumpe, insbesondere Turbomolekularpumpe (111), insbesondere nach einem der Ansprüche 1 bis 9, mit
- einem axialen Einlass (115) für ein zu pumpendes Gas,
- zumindest einer Pumpstufe, die einen Stator und einen im Betrieb relativ zum Stator um eine Drehachse (D) rotierenden Rotor (149) umfasst, und
- zumindest einem Magnetlager (183) für den Rotor (149), insbesondere für einen einlassnahen Endbereich des Rotors, das einen Magnetlagerrotor (191) und den mit diesem zusammenwirkenden Magnetlagerstator (11, 193) umfasst, die jeweils einen Stapel aus mehreren Permanentmagnetringen (21) aufweisen,
wobei der Magnetlagerrotor (191) am Rotor (149) und der Magnetlagerstator (11, 193) an einem Halter (13, 203) des Stators angeordnet ist und der Magnetlagerstator (11, 193) ein um die Drehachse (D) verdrehbares Stellelement (15) umfasst,
wobei bei dem Verfahren die axiale Position des Magnetlagerstators (11, 193) durch Verdrehen des Stellelements (15) verstellt wird, indem
- ein manuell oder automatisch handhabbares Einstellwerkzeug (25, 26, 39) dem Stellelement (15) zugeführt und mit einer am Stellelement (15) ausgebildeten Eingriffsstruktur (17) in Formschlusseingriff gebracht wird,
- das Stellelement (15) mittels des Einstellwerkzeugs (25, 26, 39) verdreht wird, indem das Einstellwerkzeug (25, 26, 39) um eine Achse gedreht und/oder geschwenkt wird, die mit der Drehachse (D) zusammenfällt oder parallel versetzt zur Drehachse (D) verläuft, insbesondere wobei das Einstellwerkzeug (25, 26, 39) rotatorisch bezüglich der Achse betrieben wird, und
- wobei das Zuführen des Einstellwerkzeugs (25, 26, 39) und das Herstellen des Formschlusseingriffs aus axialer Richtung (Ra) von der dem Einlass (115) abgewandten Seite aus erfolgt.

12. Verfahren nach Anspruch 10 oder 11,
wobei das Verstellen ein Voreinstellen der axialen Position des Magnetlagerstators (11, 193), das vor einer Montage des Magnetlagerstators (11, 193) in der Vakuumpumpe erfolgt, und ein Feineinstellen der axialen Position umfasst, das nach einer Montage des Magnetlagerstators (11, 193) in der Vakuumpumpe erfolgt.

13. Verfahren nach Anspruch 12,
wobei das Voreinstellen automatisiert erfolgt.

14. Verfahren nach Anspruch 12 oder 13,
wobei das Zuführen des Einstellwerkzeugs (25, 26, 39) zum Voreinstellen einerseits und das Zuführen des Einstellwerkzeugs (25, 26, 39) oder eines anderen Einstellwerkzeugs zum Feineinstellen andererseits aus entgegengesetzten axialen Richtungen (Re, Ra) des Magnetlagerstators (11, 193) erfolgt.

15. Verfahren nach einem der Ansprüche 12 bis 14,
wobei die Eingriffsstruktur (17) radial außen an dem Stellelement (15) angeordnet ist und eine Stirnseite des Stellelements (15) zusätzlich zumindest eine axiale Eingriffsöffnung aufweist, und
wobei das Feineinstellen erfolgt, indem ein Feineinstellwerkzeug in axialer Richtung in die Eingriffsöffnung eingeführt wird und das Stellelement (15) mittels des Feineinstellwerkzeugs verdreht wird, indem das Feineinstellwerkzeug um die Drehachse (D) geschwenkt wird, insbesondere wobei das Feineinstellwerkzeug und das Einstellwerkzeug (25, 26, 39) unterschiedlich ausgebildet sind.
